# EUROPÄISCHE PATENTSCHRIFT

(11) **EP 3 469 911 B1**
(45) Veröffentlichungstag und Bekanntmachung des Hinweises auf die Patenterteilung: **13.11.2019**
(21) Anmeldenummer: 18185369.8
(22) Anmeldetag: 25.07.2018
(51) Int. Cl.: A22C 11/00, B65G 47/252

(54) **VORRICHTUNG ZUM TRANSPORTIEREN LÄNGLICHER, EINE KRÜMMUNG AUFWEISENDER WÜRSTE**
DEVICE FOR TRANSPORTING ELONGATED SAUSAGES WITH A CURVATURE
DISPOSITIF DE TRANSPORT DE SAUCISSE OBLONGUE COMPORTANT UNE COURBURE

(30) Priorität: 10.10.2017 DE 102017123517
(43) Veröffentlichungstag der Anmeldung: 17.04.2019
(73) Patentinhaber: Singer & Sohn GmbH, 92334 Berching (DE)
(72) Erfinder: Singer, Manfred, 92334 Berching (DE); Koller, Dieter, 92360 Mühlhausen (DE)
(74) Vertreter: Lindner Blaumeier Patent- und Rechtsanwälte

(56) Entgegenhaltungen:
- DE-B3-102016 114 731
- DE-U1-202017 104 924
- GB-A- 2 161 445
- US-A- 4 082 177

## Beschreibung

Die Erfindung betrifft eine Vorrichtung zum Transportieren länglicher, eine Krümmung aufweisender Würste.

Würste werden bekanntlich in unterschiedlichen Kalibern hergestellt und besitzen je nach Wurstart entweder eine gerade, gestreckte Form, oder sind, wie zumeist, gekrümmt, weisen also eine Biegung auf. Die fertigen Würste werden, gegebenenfalls nach einer entsprechenden Behandlung, hintereinander auf einer Fördereinrichtung liegend transportiert. Die Würste sind dabei mit ihrer Längsrichtung quer zur Förderrichtung auf der Fördereinrichtung angeordnet. Sie werden zumeist zu einer entsprechenden Gruppierungseinrichtung, in der dann aus den einzelnen Würsten entsprechende Wurstgruppen gebildet werden, transportiert, wonach die einzelnen Wurstgruppen über ein entsprechendes Handlingsystem gegriffen und in entsprechende Verpackungen eingebracht werden.

Während bei geraden, lang gestreckten Würsten die Gruppierung und das Einbringen kein Problem darstellt, da die geraden Würste innerhalb der Wurstgruppe unmittelbar aneinander anliegen und demzufolge jede Wurstgruppe stets nahezu die gleiche Dimensionierung aufweist, entstehen bei gekrümmten, also gebogenen Würsten diesbezüglich Probleme. Denn die Würste werden über die Fördereinrichtung regellos angefördert. Das heißt, dass zwei hintereinander angeordnete, transportierte Würste entweder gleich ausgerichtet sein können, also mit ihrer Krümmung einheitlich bzw. gleich ausgerichtet liegen, oder sie sind unterschiedlich positioniert, das heißt, dass entweder die beiden Krümmungen respektive Krümmungsbäuche benachbart zueinander liegen, oder die beiden Enden liegen jeweils benachbart zueinander und die Krümmungen respektive Bäuche weisen voneinander weg. Werden nun innerhalb der Gruppiereinrichtung aus diesen quasi regellos orientierten Würsten entsprechende Wurstgruppen gebildet, so variiert die in Förderrichtung gesehene Länge der Wurstgruppe je nachdem, wie die einzelnen Würste zueinander liegen. Im Idealfall, wenn alle Krümmungen respektive Bäuche gleich gerichtet sind, liegen die einzelnen Würste engst möglich aneinander an. Im schlechtesten Fall sind zwei benachbarte Würste jeweils maximal voneinander beabstandet, das heißt, dass entweder die Bäuche aneinander anliegen, oder die jeweiligen Enden, so dass folglich ein sehr langes Wurstgruppenpaket entsteht. Ein automatisiertes Handling ist dann kaum durchführbar.

Um hier Abhilfe zu schaffen, mitunter auch auf konkreten Wunsch des Anlagenbetreibers hin, ist es bekannt, über eine Erfassungseinrichtung die Ausrichtung der hintereinander transportierten Würste zu erfassen und mit einer mechanischen Ausricht- oder Korrektureinrichtung, die eine Art Greifer besitzt, eine nicht in einer vorab definierten Richtung ausgerichtete Wurst zu erfassen, anzuheben und zu drehen, so dass auf diese Weise sämtliche zur Gruppiereinrichtung geförderten Würste gleich ausgerichtet sind. Die Integration einer solchen Ausricht- oder Korrektureinrichtung ist jedoch sehr aufwändig, auch dauert der Ausricht- oder Wendevorgang beachtlich lang, so dass der Durchsatz nicht allzu groß ist, resultierend aus einer stets variierenden Anzahl an Dreh- oder Wendevorgängen.

Aus DE 20 2017 104 924 U1 ist eine Vorrichtung zum Ausrichten von gekrümmten Würsten bekannt. Die Vorrichtung umfasst eine Fördereinrichtung zum Transportieren der Würste entlang einer Förderstrecke, wobei die Fördereinrichtung ein umlaufendes Förderelement umfasst, auf dem die Würste in Abständen zueinander und mit ihren Längsachsen im Wesentlichen senkrecht zur Förderrichtung des Förderelements liegen. Vorgesehen ist ferner eine Wendeeinrichtung, welche oberhalb des Förderelements angeordnet ist und dazu eingerichtet ist, mit einer Wurst in Kontakt gebracht zu werden und die etwa quer zur Förderrichtung des Förderelements ausgerichteten Würste hinsichtlich ihren Krümmungen auf dem Förderelement identisch auszurichten. Eine solche Wendeeinrichtung kann beispielsweise eine rotierend angetriebene Wenderolle sein, die mit den zu wendenden Würsten in Kontakt gebracht wird.

Der Erfindung liegt damit das Problem zugrunde, eine demgegenüber verbesserte Vorrichtung zum Transportieren länglicher, eine Krümmung aufweisender Würste anzugeben.

Zur Lösung dieses Problems ist erfindungsgemäß eine Vorrichtung nach Anspruch 1 zum Transportieren länglicher, eine Krümmung aufweisender Würste vorgesehen, mit einer ersten Fördereinrichtung umfassend zwei seitlich voneinander beabstandete, umlaufende Förderbänder oder-riemen mit jeweiligen Stollen zum regellosen Aufnehmen der Würste, wobei in zwei benachbarten Stollen jeweils ein Endabschnitt einer Wurst aufnehmbar ist, wobei zumindest abschnittsweise entlang der Förderstrecke unterhalb der Förderbänder oder -riemen ein Freiraum zur Ermöglichung eines Durchpendels der im Randbereich auf den Förderbändern oder-riemen gelagerten Würste derart, dass sie mit der Krümmung nach unten in den Freiraum hängen, vorgesehen ist, mit einem Anlaufbauteil, gegen das eine durchhängende Wurst läuft, worüber sie in Richtung der Förderebene hochgeschwenkt wird, und mit einer zweiten Fördereinrichtung zur Übernahme der hochgeschwenkten Wurst.

Bei der erfindungsgemäßen Transportvörrichtung kommen zwei Fördereinrichtungen zum Einsatz, zwischen denen eine automatische Ausrichteinrichtung vorgesehen ist, die den Umstand, dass die Würste krumm sind, als Arbeits- oder Funktionsmittel zum Ausrichten der Würste nutzt. Die Würste werden hinsichtlich der Krümmungsausrichtung regellos hintereinander auf einer ersten Fördereinrichtung antransportiert. Die erste Fördereinrichtung weist zwei seitlich voneinander beabstandete Förderbänder oder Förderriemen auf, die entsprechende Stollen aufweisen, in denen jeweils eine Wurst aufgenommen ist. Das heißt, dass jede Wurst im Bereich ihrer Enden auf den beiden Förderbändern oder Förderriemen aufliegt. Im Rahmen der Förderung der Würste vor dem Ausrichtvorgang liegen die Würste im Wesentlichen horizontal und sind über eine zwischen den Förderbändern oder -riemen angeordnete Auflageeinrichtung unterstützt, wenn angenommen wird, dass die erste Fördereinrichtung ebenfalls horizontal positioniert ist.

Die Würste gelangen sodann in den Bereich eines Freiraums, in dem sie nur noch im Bereich ihrer Wurstenden auf den beiden beabstandeten Förderbändern oder Förderriemen aufliegen. Diese Auflagepunkte bilden Schwenkpunkte, respektive definierend eine Schwenkachse, um die die Wurst nun, da über ihre gesamte Länge eben nicht mehr abgestützt, durchpendeln kann, also mit ihrer Krümmung oder ihrem Bauch in den Freiraum herabschwenkt. Das heißt, dass durch dieses Durchpendeln die Wurst nur noch im Bereich ihrer seitlichen Enden auf den Förderbändern oder -riemen liegt, ihr mittlerer Bereich mit der Krümmung hängt nach unten in den Freiraum. Dies geschieht nun mit jeder Wurst, unabhängig davon, ob bei der Anförderung nun die Krümmung oder der Bauch in Förderrichtung oder entgegen der Förderrichtung ausgerichtet war.

Die nach wie vor randseitig auf den Förderbändern oder Förderriemen aufgelagerten, transportierten Würste laufen sodann bei fortgesetzter Förderung einzeln und hintereinander gegen ein Anlaufbauteil, das heißt, dass sie mit ihrer nach unten hängenden Krümmung oder Bauch gegen dieses Anlaufteil laufen. Nachdem sie über die Förderbänder oder Förderriemen, dort in den jeweiligen Stollen aufgenommen, trotz Anlaufens gegen das Anlaufbauteil in Förderrichtung transportiert werden, kommt es dazu, dass sie mit ihrer Krümmung oder ihrem Bauch quasi entgegengesetzt der Förderrichtung hochgeschwenkt werden, das heißt, dass die Krümmung oder der Bauch entgegengesetzt zur Förderrichtung wieder in die horizontale Ebene hochgeschwenkt werden. In dieser Position, die sämtliche Würste zwangsläufig aufgrund des vorherigen Durchpendelns und Anlaufens gegen das Anlaufbauteil einnehmen, werden die Würste sodann an eine zweite Fördereinrichtung übergeben, auf der dann sämtliche Würste exakt gleich in Bezug auf die Orientierung ihrer Krümmung ausgerichtet sind. Hieran kann sich sodann entweder eine Gruppierung oder eine Handlingseinrichtung, z. B. ein Deltagreifer zur direkten Verbringung in entsprechende Verpackungen oder ähnliches anschließen.

Ersichtlich kommt bei der erfindungsgemäßen Transportvorrichtung keine zusätzliche, in irgendeiner Weise automatisiert oder gesteuert arbeitende Ausricht- oder Korrektureinrichtung zum Einsatz. Vielmehr basiert die erfindungsgemäße Ausrichtung oder Korrektur einzig und allein auf eben dem Umstand, dass wurstseitig eine bestimmte Form vorgegeben ist, die im Stand der Technik zu entsprechenden Problemen führt, das heißt, dass sich die Erfindung letztlich gerade den im Stand der Technik nachteiligen Umstand zu Nutze macht und diesen als Funktionsmerkmal nutzt.

Wie beschrieben werden die Würste auf der ersten Fördereinrichtung beispielsweise horizontal liegend transportiert. Mit ihren Rändern sind sie wie ausgeführt in den Stollen der beiden Förderbänder oder Förderriemen aufgenommen. Im Bereich der Wurstmitte, also im Bauchbereich, sind sie über eine Auflageeinrichtung ebenfalls unterstützt und können beispielsweise auf einer entsprechenden Gleitfläche, die ein gutes Gleiten der über die seitlichen Stollen mitgenommenen Würste ermöglicht, aufgenommen sein. Zweckmäßig ist es jedoch, wenn alternativ zu einer solchen Gleitfläche dem Freiraum vorgeschaltet zwischen den Förderbändern oder -riemen ein weiteres umlaufendes Fördermittel vorgesehen ist, das ebenfalls Stollen aufweist, die in Verlängerung der Stollen der Förderbänder oder -riemen angeordnet sind und die Wurst aufnehmen. Das heißt, dass die erste Fördereinrichtung letztlich zwei separate Förderer umfasst, nämlich die beiden seitlichen Förderbänder oder-riemen sowie dazwischen ein weiteres Fördermittel in Form eines entsprechenden Stollenbandes oder dergleichen, wobei sämtliche Stollen axial miteinander fluchten. Auf diesem mittleren Fördermittel bzw. dieser mittleren Fördereinrichtung liegen also die Würste während des üblichen Transports auf. Das Fördermittel, z. B. das Stollenband endet, wenn der Übergang zum Freiraum erreicht ist, da dort natürlich die Würste mittig nicht mehr zu unterstützen sind, nachdem sie dort durchpendeln sollen.

Ein zentrales Element zum Ausrichten der Würste ist das Anlaufbauteil, gegen das die Würste laufen, und über das sie wieder definiert hochgeschwenkt werden. Gemäß einer ersten Erfindungsalternative kann dieses Anlaufbauteil als im Freiraum angeordnete Schräge ausgeführt sein, vorzugsweise in Form einer rampenartigen, schräg angeordneten Platte, alternativ auch als schräg angeordnete Strebe oder Leiste. Die durchhängenden Würste laufen mit ihrem tiefsten Punkt, also der Bauchspitze, gegen diese Schräge und werden zwangsläufig abgebremst, während die beiden Enden, da in den Stollen liegend, weiterbewegt werden. Durch dieses Bremsen verbunden mit dem Anstellwinkel der Schräge werden die Würste sodann auf dieser Schräge weitergezogen und gleichzeitig mit ihrer vormals durchhängenden Krümmung entgegen der Förderrichtung nach oben geschwenkt, bis in die Horizontale, in welcher Position einerseits die Schräge endet, mithin also die Würste von der Schräge wieder heruntergefördert werden, und andererseits dann die Übergabe zur zweiten Fördereinrichtung erfolgt.

Die Schräge, sei es in Form der Platte oder der Strebe oder Leiste, ist beispielsweise als Metallbauteil, vorzugsweise aus Edelstahl, ausgeführt. Es kann sich aber auch um ein Kunststoffbauteil, beispielsweise aus PTFE oder einem anderen Werkstoff handeln.

Alternativ zur Ausführung der Schräge in Form einer positionsfesten Platte oder Strebe respektive Leiste ist es auch denkbar, die Schräge über ein Trum eines im Freiraum angeordneten, umlaufenden Förderbandes, das mit einer niedrigeren Geschwindigkeit umläuft als die Förderbänder oder-riemen, oder mittels einer Rollenkaskade, die aus mehreren in Transportrichtung hintereinander angeordneten, drehbare Rollen, die, sofern aktiv angetrieben, mit einer niedrigeren Geschwindigkeit rotieren als die Förderbänder oder-riemen, zu bilden. Das Funktionsprinzip hier ist das gleiche wie bei der vorstehend beschriebenen Alternative beschrieben. Jedoch ist hier die Schräge nicht feststehend, sondern mittels eines Förderbandes gebildet, das einen schräg verlaufenden Abschnitt oder ein schräg verlaufendes Trum aufweist, gegen das die einzelnen Würste laufen. Da die Bewegungsgeschwindigkeit des schrägen Trums langsamer ist als die der seitlichen Förderbänder oder -riemen kommt es auch hier zu einem Abbremsen und zu einem Hochziehen entlang der Schräge bis in die horizontale Ausrichtposition. Der Vorteil der Verwendung eines umlaufenden Förderbandes zur Bildung der Schräge liegt darin, dass das Förderband kontinuierlich gereinigt werden kann, das heißt, dass unterhalb davon eine entsprechende Reinigungsstation vorgesehen werden kann, durch die das Förderband permanent läuft, so dass es stets gereinigt wird. Dies ist zweckmäßig, als wie ausgeführt die Würste aktiv entlang der Schräge hochgezogen werden, mithin also eine verstärkte Beanspruchung, die, da es sich um organisches Material handelt, zu einem Belag führen kann, gegeben ist. Alternativ kann auch eine schräg stehende Rollenkaskade zur Bildung der Schräge vorgesehen sein, wobei die Rollen in einem geeigneten Rahmen gelagert sind. Sie sind angetrieben und rotieren mit einer Geschwindigkeit, die niedriger ist als die Transportgeschwindigkeit der Förderbänder oder -riemen, so dass auch hier ein Bremseffekt einsetzt, der in Verbindung mit der Schrägstellung zum Hochschwenken führt. Die Rollen können z.B. über einen gemeinsamen Riemen gekoppelt sein, so dass nur eine Rolle aktiv über einen Motor anzutreiben ist. Alternativ können die Rollen auch nicht angetrieben sein, sondern erst bei Anlaufen einer Wurst in Drehung versetzt werden.

Zweckmäßig ist es, wenn der Anstellwinkel der Schräge manuell oder automatisch verstellt werden kann, beispielsweise, indem die Schräge, z. B. die Platte, in die definierte Schrägpositionen gebracht werden kann, die beispielsweise über entsprechende Arretier- oder Einhängpositionen an einem Rahmengestell oder dergleichen definiert sind. Alternativ kann auch ein Stellzylinder oder ähnliches verwendet werden, um den Anstellwinkel kontinuierlich respektive automatisch verändern zu können. Hierüber kann die Strecke und die Dauer, über die respektive während welcher die Würste in Kontakt mit der Schräge sind, und damit auch die Geschwindigkeit des Hochschwenkvorgangs eingestellt werden, wie darüber auch eine Anpassung an entsprechend variierende Wurstlängen mit variierenden Krümmungsradien oder Wurstkaliber und dergleichen möglich ist.

Alternativ zur Ausführung des Anlaufbauteils in Form einer positionsfesten Schräge oder einer sich bewegenden Schräge ist es denkbar, das Anlaufbauteil über einen, vorzugsweise vertikal, auf- und abbewegbaren Stift zu bilden, wobei durchhängende Wurst gegen den hochgefahrenen Stift läuft, der nach Hochschwenken der Wurst abwärts bewegt wird. Der Stift bildet also eine Art Anschlag, gegen den die Wurst läuft und aufgrund der Bremswirkung hochgeschwenkt wird. Der Stift selbst geht mit entsprechendem Takt auf und ab, wird also in den und aus dem Förderweg bewegt. Er befindet sich in der Förderstrecke natürlich nur dann, wenn eine Wurst kommt und hochgeschwenkt werden soll, um die Wurst sodann wieder auszulassen und für den fortgesetzten Transport freizugeben wird er wieder abgesenkt. Die Bewegung des Stiftes kann über einen entsprechenden Stellmotor oder dergleichen mit der entsprechenden Frequenz gesteuert werden.

Schließlich kann das Anlaufbauteil auch in Form einer drehbaren Rolle gebildet sein. Die Rolle kann z.B. angetrieben sein und mit einer niedrigeren Geschwindigkeit als der Fördergeschwindigkeit der Förderbänder oder -riemen rotieren. Jede Wurst läuft gegen die Rolle oder Trommel und wird dort einerseits gebremst, andererseits wird sie, resultierend aus dem runden Querschnitt der Rolle bzw. Trommel, auf die die transportierte Wurst aufläuft, auch hochgeschwenkt. Alternativ kann die Rolle auch nicht angetrieben sein, sondern erst bei Anlaufen einer Wurst in Drehung versetzt werden.

Wie beschrieben sind die Würste in entsprechenden Stollen an den Förderbändern oder Förderriemen und gegebenenfalls der zwischen diesen befindlichen Fördereinrichtung aufgenommen. Um sicherzustellen, dass zwei benachbarte Würste einander nicht berühren, also nicht aneinander anliegen, was das Durchpendeln der in Transportrichtung vorderen Wurst mitunter beeinträchtigen würde, da die Würste aneinander haften können, ist es zweckmäßig, wenn die Stollen an den Förderbändern oder -riemen und gegebenenfalls des dazwischen angeordneten Fördermittels in Förderrichtung derart voneinander beabstandet sind, dass sich zwei benachbarte, in den Stollen aufgenommene Würste nicht berühren. Das heißt, der in Förderrichtung gesehene Stollenabstand ist hinreichend groß bemessen, so dass auch bei stärkerer Krümmung die Würste nicht aneinander anliegen.

Eine zweckmäßige Weiterbildung der Erfindung sieht vor, dass im Bereich des Freiraums Umlenkeinrichtungen zum Verkippen der Förderbänder oder -riemen um ihre Längsachse nach innen zum Freiraum hin vorgesehen sind. Eine solche Umlenkeinrichtung ist bei Verwendung flacher Förderbänder oder -riemen zweckmäßig. Werden im Querschnitt runde Förderbänder oder-riemen verwendet, kann eine solche Umlenkeinrichtung entfallen. Die flachen Förderbänder oder Förderriemen werden also beidseits über diese Umlenkeinrichtungen leicht nach innen geschwenkt, so dass dem zufolge die Auflagepunkte, an denen die Würste auf den beiden Förderbändern oder Förderriemen aufliegen, nach innen schwenken. Dies ist für den Durchpendelvorgang zweckmäßig, da dadurch eine Art Zwangsführung der Förderbänder oder -riemen sichergestellt ist, also eine Lageveränderung, die aktiv auf die jeweiligen Wurstenden übertragen werden kann, was der Durchpendelbewegung förderlich ist.

Zweckmäßigerweise können die Umlenkeinrichtungen in Form zweier Schienen, die die Förderbänder oder -riemen in Förderrichtung führen und eine die Verkippung erwirkende Führungsflächenform aufweisen, gebildet sein. Die Förderbänder oder Förderriemen laufen also im Bereich des Freiraums auf die beiden Umlenkeinrichtungen respektive deren Führungsflächen auf, und werden, resultierend aus der nach innen gekippten Führungsflächenform, zwangsläufig nach innen gekippt.

Der Verkippungswinkel sollte zwischen 15 - 60°, insbesondere zwischen 25 - 45° und vorzugsweise bei ca. 30° liegen. Nach dem Verkippen, wenn die Förderbänder oder Förderriemen von den Umlenkeinrichtungen wieder ablaufen, richten sie sich zwangsläufig wieder parallel aus.

Um den Durchpendelvorgang, aber auch das Hochschwenken noch sicherer zu gestalten, ist es denkbar, Vibrationsmittel zum Erzeugen von Vibrationen an den Umlenkeinrichtungen zumindest im Bereich der Führung der Förderbänder oder-riemen vorzusehen. Über diese Vibrationsmittel ist es möglich, die Umlenkeinrichtungen in höher frequente Vibrationen zu versetzen, was dazu führt, dass auch die auf den Umlenkeinrichtungen geführten Förderbänder oder Förderriemen entsprechend vibrieren. Dies führt dazu, dass die an ihnen anliegenden respektive in den Stollen liegenden Würste ebenfalls in diesem Bereich die Vibrationen erfahren. Diese Vibrationen führen nun dazu, dass sich die Würste zwangsläufig auch, wenn gegeben, von ihrer Anlage an den Stollenwänden lösen können, mithin also daran nicht fest anliegen. Dies ist insbesondere auch für das Hochschwenken von Vorteil, da die Würste nicht an den Stollenwänden hängen bleiben können.

Eine zweckmäßige Weiterbildung der Erfindung sieht vor, dass die Förderbänder oder -riemen in ihrem Abstand zueinander manuell oder automatisch verstellbar. Das heiß, dass nach Bedarf die Förderbänder oder-riemen entweder enger oder weiter zueinander positioniert werden können. Dies ermöglicht es, die Vorrichtung in Bezug auf entsprechend unterschiedlich lange Würste anpassen zu können. Diese Seitenverstellung der beiden Förderbänder oder Förderriemen kann manuell erfolgen, beispielsweise über entsprechende Gewindespindeltriebe, die zusammen- oder auseinandergeschraubt werden können und mit denen die entsprechenden Führungen der Förderbänder oder -riemen gekoppelt sind. Auch eine automatische Verstellung über entsprechende Stellzylinder ist denkbar, wobei in diesem Fall über eine Erfassungsvorrichtung automatisch die Wurstlänge erfasst werden kann, woraufhin die Ausrichtung der Förderbänder oder-riemen erfolgen kann, folglich also die Breite entsprechend automatisch umgestellt werden kann.

Des Weiteren ist es denkbar, dass die Förderbänder oder-riemen und gegebenenfalls das dazwischen angeordnete Fördermittel lösbar und austauschbar an der sie bewegenden Bewegungseinrichtung angeordnet sind. Die Förderbänder oder -riemen laufen natürlich über entsprechende Antriebs- oder Umlenkrollen. Es besteht nun die Möglichkeit, sie abzunehmen und gegen andere Förderbänder oder-riemen beziehungsweise Fördermittel, die eine kleinere oder größere Stollenweite aufweisen, auszutauschen. Dies ermöglicht eine Anpassung an unterschiedliche Wurstkaliber. Es ist beispielsweise denkbar, ein erstes Band- oder Riemenpaar für ein erstes Kaliberintervall, z. B. für Kaliber 10 - 18 mm (das Kaliber gibt den Durchmesser der Wurst in mm an) auszulegen. Ein zweites, im Austausch aufsetzbares Bänder- oder Riemenpaar ist mit Stollen für ein Kaliberintervall von Kaliber 18 - 25 mm und ein drittes Bänder- oder Riemenpaar für ein drittes Kaliberintervall von 25 - 40 mm ausgelegt, oder ähnliches. Dies ermöglicht eine einfache und flexible Anpassung der Vorrichtung hinsichtlich des Wurstkalibers der zu fördernden Würste, so dass die Vorrichtung auch für unterschiedliche Kaliber genutzt werden kann, insbesondere dann auch in Verbindung mit der Anpassung des Abstands der Förderbänder oder -riemen. Sofern auch das mittige Fördermittel Stollen aufweist, kann auch dieses getauscht werden.

Weiterhin kann der ersten Fördereinrichtung eine Ausrichteinrichtung zum seitlichen Ausrichten der in den Stollen aufgenommenen Würste zugeordnet sein. Über diese Ausrichteinrichtung wird sichergestellt, dass alle Würste in Bezug auf eine gemeinsame Ebene oder Linie mit einem Ende ausgerichtet sind. Da die zumeist maschinell hergestellten Würste ohnehin nahezu gleiche Längen aufweisen, kann hierüber sichergestellt werden, dass die hintereinander angeordneten Würste allesamt gleich positioniert sind und auch hinsichtlich des Pendel- und Hochschwenkvorgangs in gleichen Bereichen endseitig auf den Förderbändern oder Förderriemen aufliegen. Eine solche Ausrichteinrichtung kann beispielsweise ein positionsfestes rotierendes Rad sein, das entweder rund ist und mit seiner Umfangsfläche gegen die Wurstenden läuft, oder das an den einzelnen Würsten endseitig angreifende Ausrichtabschnitte, also zahnradartige Vorsprünge, aufweist. In diesem Fall ist eine entsprechende Synchronisierung in Bezug auf die Stollen erforderlich.

Wie beschrieben werden die erneut hochgeschwenkten, dann aber ausgerichteten Würste auf eine zweite Fördereinrichtung übergeben, wo entweder eine Gruppierung oder unmittelbar ein entsprechendes Handling der ausgerichteten Würste stattfindet. Diese zweite Fördereinrichtung umfasst bevorzugt mehrere parallel angeordnete Förderbänder oder-riemen, wobei die Förderbänder oder - riemen der ersten Fördereinrichtung zwischen zwei Förderbänder oder -riemen der zweiten Fördereinrichtung laufen. Das heißt, dass quasi die Fördereinrichtungen ineinander eingreifen, so dass eine sehr einfache Übergabe möglich ist, da in der gleichen Transportebene ein nahtloser Übergang realisiert werden kann.

Zweckmäßig ist es ferner, wenn der zweiten Fördereinrichtung eine Gruppierungseinrichtung zum Bilden einer Wurstgruppe zugeordnet ist, mithin also eine definierte Gruppe aus einer definierten Wurstanzahl im Bereich der zweiten Fördereinrichtung gebildet wird. Eine solche Wurstgruppe kann beispielsweise 5 oder 10 Würste umfassen, je nachdem, wie das entsprechende Paket auszulegen ist und wie das nachgeschaltete Handlingsystem eingerichtet ist. Eine solche Gruppierungseinstellung kann beispielsweise wenigstens ein reversibel in den Bewegungsweg der Würste einbringbares Brems- oder Stoppelements zum Bremsen oder Stoppen einer Wurst zur Bildung einer Wurstgruppe umfassen. Ein solches Brems- oder Stoppelement, beispielsweise ein z. B. vertikal bewegbarer Stift, der über einen Stellzylinder oder dergleichen bewegt werden kann, dient quasi als Anlaufelement, gegen das die erste Wurst läuft. Gegen diese erste Wurst läuft sodann die nächste Wurst und gegen diese wiederum die nächste etc., bis die entsprechende Wurstgruppe gebildet ist, wonach das Brems- oder Stoppelement wieder aus dem Bewegungsweg gebracht wird, um die gebildete Wurstgruppe weiter zur Handlingstation transportiert wird. Bevorzugt sind zwei seitlich beabstandete Stifte vorgesehen, so dass quasi eine Anschlaglinie oder - ebene gebildet ist und ein Verrutschen um eine Vertikalachse ausgeschlossen ist.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Perspektivansicht einer erfindungsgemäßen Transportvorrichtung,
- Fig. 2: eine Teilansicht der Vorrichtung aus Fig. 1 unter Darstellung der ersten Fördereinrichtung,
- Fig. 3: eine Teilansicht der Vorrichtung aus Fig. 1 unter Darstellung der Ausrichteinheit,
- Fig. 4: eine Perspektivansicht eines Teils der Ausrichteinheit mit durchpendelnder Wurst,
- Fig. 5: eine Perspektivansicht der Ausrichteinheit mit ausgerichteter, hochgeschwenkter Wurst,
- Fig. 6: eine Teilansicht der Vorrichtung aus Fig. 1 unter Darstellung der zweiten Fördereinrichtung mit zugeordneter Gruppierungseinrichtung,
- Fig. 7: eine Perspektivansicht im Bereich der Ausrichteinheit unter Darstellung einer optionalen Vibrationseinrichtung,
- Fig. 8: eine Prinzipdarstellung einer erfindungsgemäßen Vorrichtung einer zweiten Ausführungsform mit über ein umlaufendes Förderband gebildeter Schräge, und
- Fig. 9: eine Prinzipdarstellung einer weiteren erfindungsgemäßen Vorrichtung mit einer dritten Ausführungsform eines Anlaufbauteils zum Hochschwenken der durchgependelten Würste.

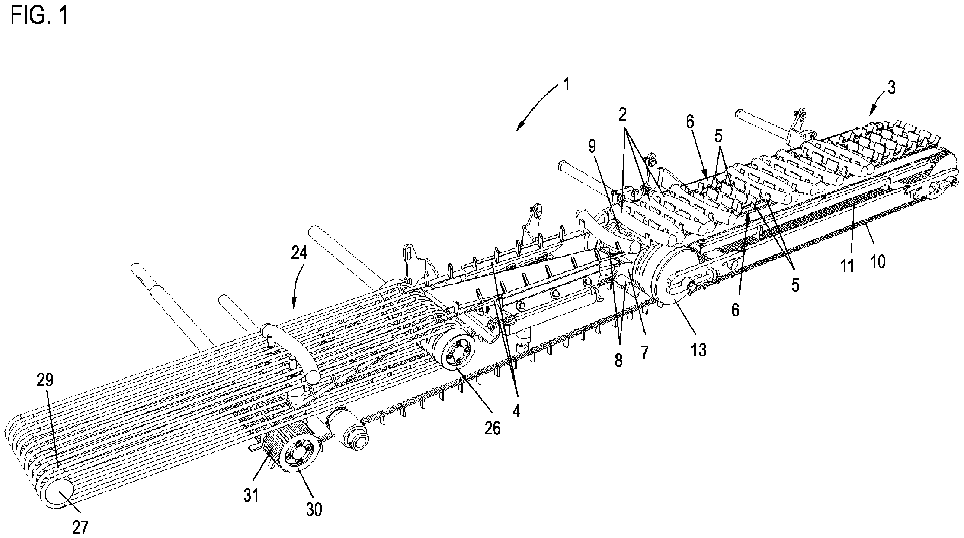

Fig. 1 zeigt eine erfindungsgemäße Vorrichtung 1 zum Transportieren länglicher, eine Krümmung aufweisender Würste 2, Die Vorrichtung 1 umfasst eine erste Fördereinrichtung 3 umfassend zwei seitlich voneinander beabstandete umlaufende Förderbänder oder Förderriemen 4, die jeweilige außenseitig vorspringende Mitnehmer 5 aufweisen, wobei zwischen jeweiligen Mitnehmern 5 jeweils ein Stollen 6 gebildet ist. In jedem dieser Stollen 6 ist jeweils eine Wurst 2 aufgenommen und mit ihren Endabschnitten auf dem jeweiligen Förderband oder -riemen 4 gelagert.

Zwischen den beiden Förderbändern oder -riemen 4 ist ein weiteres, umlaufendes Fördermittel 7, im gezeigten Beispiel ebenfalls ein Förderband, vorgesehen, an dem ebenfalls über Mitnehmer 8 entsprechende Stollen 9 ausgebildet sind, die in Verlängerung der Stollen 6 positioniert sind. Das heißt, dass eine Wurst 2 jeweils mit ihren Endabschnitten im Bereich der Stollen 6 und mit ihrem mittleren Bereich in einem Stollen 9 aufgenommen ist.

Ersichtlich liegen die Würste 2 auf der ersten Fördereinrichtung 3 quasi regellos in horizontaler Lage, das heißt, dass keine definierte Ausrichtung der gekrümmten Würste hinsichtlich der Lage der Krümmung gegeben ist. Wie Fig. 1 deutlich zeigt, weisen die Krümmungen oder Bäuche zweier benachbarter Würste entweder voneinander weg oder liegen benachbart zueinander, die Ausrichtung ist völlig zufällig. Wie nachfolgend noch beschrieben wird, ist es mit der erfindungsgemäßen Transportvorrichtung möglich, sämtliche Würste in eine gemeinsame, definierte Ausrichtung zu bringen.

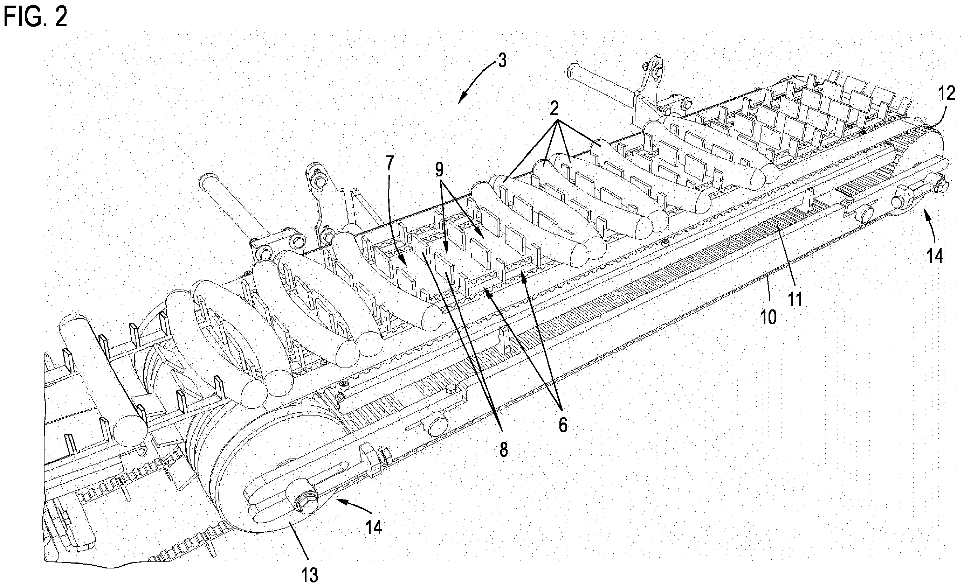

Die Förderbänder 4 sowie das Fördermittel 7, also ebenfalls dieses Förderband, weisen an ihrer Innenseite jeweils eine Verzahnung 10, 11 auf, mit der sie in eine Außenverzahnung 12 (siehe Fig. 2) einer angetriebenen Rolle eingreifen.

Am anderen Ende der Fördereinrichtung 3 ist eine Umlenkrolle 13 vorgesehen, an der jedoch lediglich das Fördermittel 7, also das mittige Förderband umgelenkt wird, während die beiden seitlich voneinander beabstandeten Förderbänder 4 weiterlaufen, sie werden lediglich über die Umlenkrolle 13 geführt.
Zur Einstellung der jeweiligen Band- oder Riemenspannung, sei es bezüglich der Förderbänder oder -riemen 4, sei es bezüglich des mittigen Fördermittels 7, sind beispielsweise an der Antriebsrolle 12 oder der Umlenkrolle 13 entsprechende Einstellmittel 14 vorgesehen, über die die jeweilige Rolle längsverschoben und mithin die Spannung variiert werden kann.

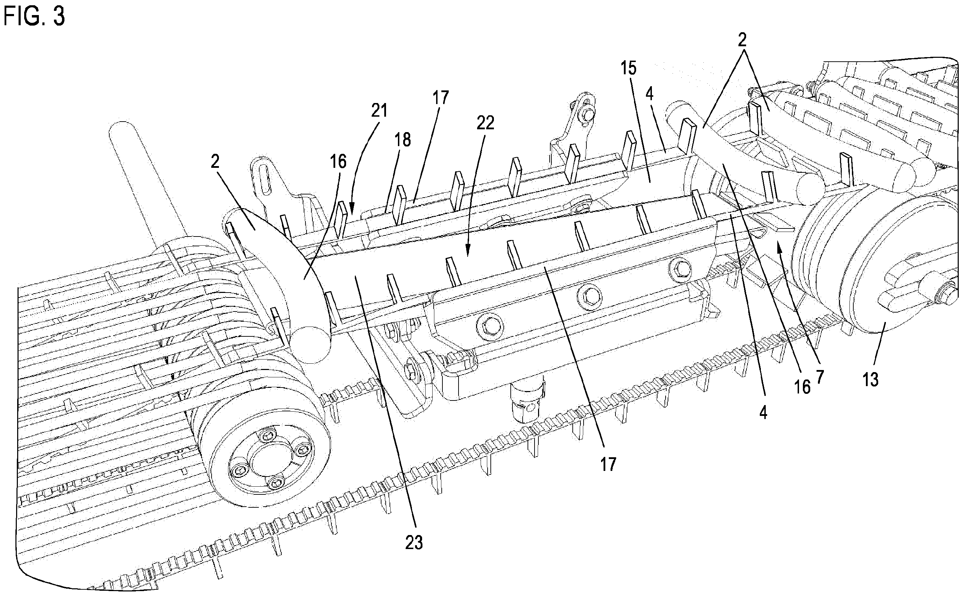

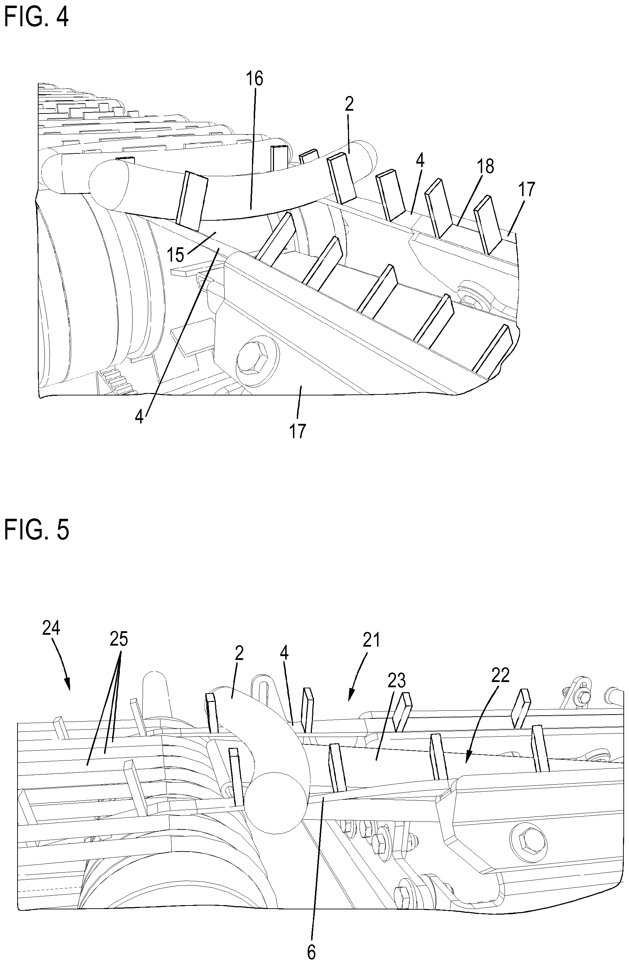

Wie die Figuren 2 und 3 zeigen laufen die beiden Förderbänder oder-riemen 4 über die Umlenkrolle 13 hinaus, so dass sich, da das zwischen ihnen befindliche Fördermittel 7 umgelenkt wird, zwangsläufig ein Freiraum 15 zwischen den Förderbändern oder -riemen 4 bildet, in welchem die Würste 2 nicht mehr mittig im Bereich ihrer Krümmung oder ihres Bauches aufgelagert sind. Sie sind lediglich im Bereich ihrer Enden auf den Förderbändern oder -riemen 4 aufgelagert. Dies führt dazu, siehe insbesondere die Figuren 3 und 4, dass eine nur noch endseitig aufgelagerte Wurst durchpendeln kann, das heißt, dass sie mit ihrer Krümmung oder mit ihrem Bauch 16 nach unten in den Freiraum 15 hängt. Um dieses Durchpendeln weiter zu unterstützen und quasi auch ein aktives Bewegen der Wurst in diese durchhängende Position zu fördern, laufen die beiden Förderbänder oder-riemen 4 über Umlenkeinrichtungen 17, die in Form länglicher Führungsschienen ausgebildet sind und eine entsprechende Führungsnut 18 aufweisen, in die jedes Führungsband oder -riemen 4 einläuft. Die Umlenkeinrichtungen 17 sind so ausgeführt und positioniert, dass jedes Förderband 4 oder jeder Förderriemen eine geringe Torsion um seine Längsachse erfährt, wie insbesondere Fig. 4 deutlich zeigt. Das heißt, dass die Förderbänder oder-riemen 4 nach innen gekippt werden, was das Durchpendeln der jeweiligen Wurst unterstützt und quasi ein durch die Twist- oder Verdrehbewegung des Förderbands oder -riemen 4 ein Impuls an die jeweilige Wurst gegeben wird, der, sofern sie noch nicht durchgependelt ist, diese Pendelbewegung unterstützt. Laufen die Förderbänder oder -riemen 4 wieder von der jeweiligen Umlenkeinrichtung 17 herunter, so gehen sie wieder in ihre unverdrehte Ausgangsposition wieder, wie Fig. 3 deutlich zeigt.

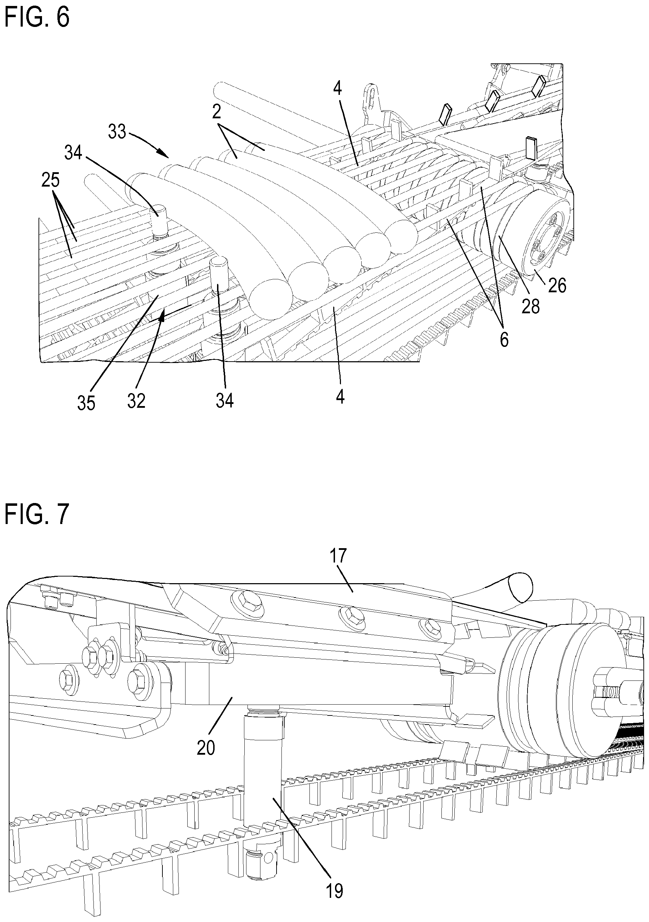

Zur weiteren Unterstützung der Durchpendelbewegung ist es denkbar, die Umlenkeinrichtungen 17 mit einem Vibrätionsmittel 19 zu koppeln, wie es optional in Fig. 7 dargestellt ist. Die Umlenkeinrichtungen 17 sind an einem gemeinsamen Trägerrahmen 20 angeordnet, dem wiederum ein Vibrationsmittel 19, beispielsweise ein mit hinreichender Frequenz arbeitender Zylinder oder ein Piezoschwinger oder dergleichen zugeordnet ist, der dazu führt, dass der gesamte Rahmen 20 und mit ihm die beiden Umlenkeinrichtungen 17 mit entsprechender Frequenz vibrieren. Dies führt dazu, dass jede auf die Umlenkeinrichtungen 17 auflaufende Wurst zusätzlich im Bereich ihrer Auflage aktiv vibriert wird, mithin also stets eine leichte Ablösung von der jeweiligen längsseitigen Auflage erreicht wird. Hierüber kann sichergestellt werden, dass jede Wurst durchpendelt, auch wenn sie zuvor beispielsweise am jeweiligen benachbarten Mitnehmer 5 noch anlag und gegebenenfalls noch nicht vollständig durchgependelt ist. Ein solches Vibrationsmittel ist jedoch lediglich optional und nicht zwingend.

Jede durchgependelte Wurst 2 ist nach wie vor im jeweiligen Stollen 6 der beiden benachbarten Förderbänder oder -riemen 4 aufgenommen. Hierüber werden sie mitgenommen und längs des Freiraumes 15 transportiert. Dem Freiraum 15 zugeordnet ist eine Ausrichteinrichtung 21, die der gleichmäßigen Ausrichtung der durchgependelten Würste 2 dient. Diese Ausrichteinrichtung 21 umfasst im gezeigten Ausführungsbeispiel eine Schräge 22, die über ein Blech 23, vorzugsweise ein Edelstahlblech, gebildet ist, das gegebenenfalls in seinem Anstellwinkel verändert werden kann. Es steht schräg zur Transportebene der durchgependelten Würste 2, läuft also von unten durch den Freiraum 15 nach oben in den Bereich der Transportebene,

Jede durchgependelte Wurst hängt zwangsläufig mit ihrem Bauch 16 tiefer als die Förderebene, was dazu führt, dass sie bei Transport längs des Freiraums 15 zwangsläufig mit ihrem Bauch 15 gegen die Schräge 22 läuft. Hierüber wird die Wurst einerseits gebremst, andererseits wird sie bei fortgesetzter Förderung natürlich hochgeschwenkt, das heißt, dass der Bauch 15 entgegen der Förderrichtung quasi nach hinten geschwenkt wird. Am Ende der Schräge 23, siehe Fig. 3, ist die an ihr anliegende Wurst 2 wieder in die Horizontalebene geschwenkt, jedoch befindet sich ihr Bauch 16 nunmehr, bezogen auf die Förderrichtung, hinten. Da sämtliche Würste 2 längs dieser Schräge 22 transportiert werden, werden zwangsläufig alle Würste 2 in eben dieser Weise gleichmäßig ausgerichtet.

Anstelle einer Edelstahlplatte kann die Platte 23 auch aus Kunststoff, beispielsweise PTFE, sein. Auch kann anstelle einer Platte 23 eine Strebe oder ähnliches vorgesehen sein. Wichtig ist lediglich, dass das jeweilige Ausrichtelement schräg im Freiraum 15 von unten kommend verläuft, so dass der jeweils durchhängende Bauch zwangsläufig dagegen geführt und bei weiterem Transport nach oben geschwenkt wird.

Eine vergrößerte Ansicht der ausgerichteten, hochgeschwenkten Wurst 2 ist in Fig. 5 gezeigt. Ersichtlich liegt die Wurst auf der Schräge 22 respektive der Platte 23 auf, ihr Bauch jedoch ist entgegen der Förderrichtung nach hinten gerichtet. Sie befindet sich nahezu in horizontaler Ausrichtung, nachdem die Schräge 22 mit ihrem vorderen Ende bis nahe oder in die Transportebene läuft. Sie befindet sich jedoch nach wie vor in jeweils einem Stollen 6 und wird hierüber mitgenommen.

Wie Fig. 5 zeigt, schließt sich an den Bereich der Ausrichteinrichtung 21 nahtlos eine zweite Fördereinrichtung 24 an, die aus mehreren, mit Abstand zueinander angeordneten Bändern oder Riemen oder Schnüren 25 besteht. Diese laufen um eine Umlenkrolle 26, über die auch oberseitig die beiden Förderbänder oder - riemen 4 laufen. Am anderen Ende laufen die Bänder, Riemen oder Schnüre 25 über eine zweite, angetriebene Förderrolle 27. Die Bänder, Riemen oder Schnüre 25, die, wie Fig. 6 zeigt, im gezeigten Beispiel einen runden Querschnitt aufweisen, laufen in entsprechenden Nuten 28, 29 an den entsprechenden Umlenkrollen 26, 27. Alternativ bestünde auch hier die Möglichkeit, entsprechende Zahnbänder oder-riemen zu verwenden, die in eine Außenverzahnung an wenigstens einer der Umlenkrollen 26, 27, vorzugsweise natürlich der angetriebenen Umlenkrolle 27 eingreifen. Die Bänder, Riemen oder Schnüre 25 weisen keine Mitnehmer und damit Stollen auf, da auf der zweiten Fördereinrichtung 24 keine Zwangsförderung gegen einen Widerstand wie im Bereich der vorgeschalteten Ausrichteinrichtung 21 erfolgt.

Wie die Figuren 5 und 6 zeigen tauchen die beiden Förderbänder 4 nachdem sie über die erste Umlenkrolle 26 geführt sind ab und werden zu einer Umlenkrolle 30 geführt, die unterhalb der zweiten Fördereinrichtung 24 liegt, und die im gezeigten Beispiel ebenfalls eine Außenverzahnung 31 aufweist. Von dort werden die Förderbänder 4 wieder zurückgeführt. Um dies zu ermöglichen, laufen die Förderbänder oder -riemen 4 zwischen zwei Bänder, Riemen oder Schnüre 25, die, wie ausgeführt, seitlich voneinander beabstandet sind. Die einzelnen Würste 2 werden also freigegeben und aus den Stollen 6 gehoben, da sie auf den Förderbändern, Förderriemen oder Förderschnüren 25 aufliegen. Damit ist eine einfache Übergabe von den Förderbändern oder -riemen 4 auf die zweite Fördereinrichtung 24 mit den Bändern, Riemen oder Schnüren 25 möglich.

Der zweiten Fördereinrichtung 24 ist eine Gruppierungseinrichtung 32 zugeordnet, die es ermöglicht, Wurstgruppen 33 bestehend aus einer definierten Wurstanzahl zu bilden. Diese Gruppierungseinrichtung 32 umfasst im gezeigten Beispiel zwei vertikal zwischen zwei Förderbändern, Förderriemen oder Förderschnüren 25 auf- und abfahrbare Stifte 34, die über entsprechende Stellzylinder 35 vertikal bewegt werden können. Sie können also in den und aus dem Bewegungsweg der Würste 2 bewegt werden. Werden sie nach oben gefahren, so läuft die erste Wurst 2, die auf den Bändern, Riemen oder Schnüren 25 transportiert wird, gegen die beiden Stifte 34 und wird gestoppt. Die Förderbänder, Förderriemen oder Förderschnüre 25, die gute Gleiteigenschaften relativ zur Wurst haben, laufen unter der Wurst 2 weiterhin durch. Unmittelbar danach läuft eine zweite Wurst 2 auf die erste, an den Stiften 34 anliegende Wurst auf, sodann die nächste etc., bis eine vorgegebene Wurstanzahl erreicht ist, was über eine entsprechende Erfassungseinrichtung, die hier nicht mehr gezeigt ist, erfasst werden kann, beispielsweise eine Kamera oder einen entsprechenden Sensor oder dergleichen. Sobald die entsprechende Wurstanzahl, die die Wurstgruppe 33 definiert, aufgelaufen ist, werden die Stifte 34 wieder nach unten bewegt und folglich die Wurstgruppe 33 freigegeben, die sodann unmittelbar, da nicht mehr gebremst, über die Förderbänder, Förderriemen oder Förderschnüre 25 als Gruppe weitertransportiert wird. Sobald die letzte Wurst 2 der Wurstgruppe 33 über die Gruppierungseinrichtung 32 gelaufen ist, werden die Stifte 34 wieder hochgefahren, so dass die nächste Wurst dagegen laufen und die nächste Wurstgruppe 33 gebildet werden kann.

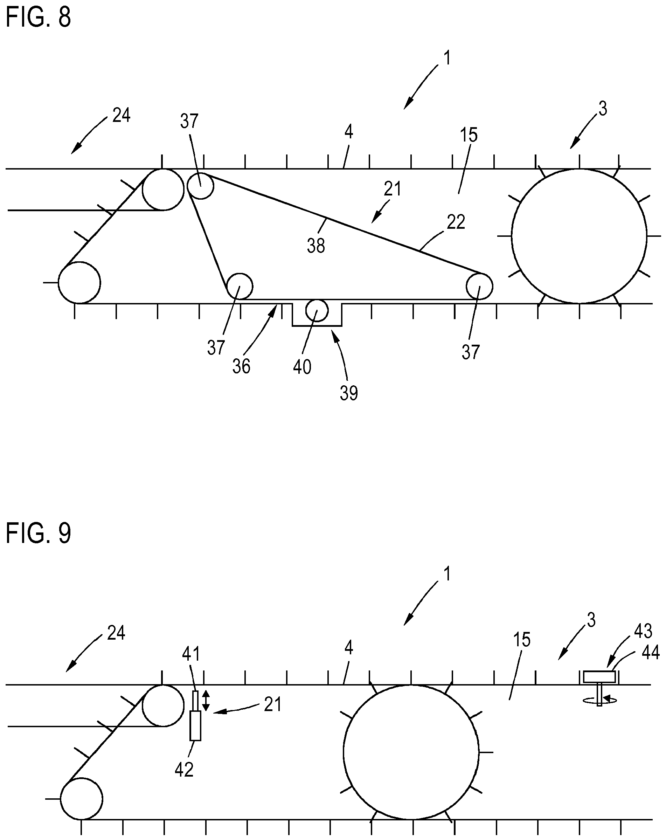

Eine alternative Ausführung einer erfindungsgemäßen Vorrichtung 1 zeigt die Prinzipdarstellung gemäß Fig. 8. Auch dort ist eine erste Fördereinrichtung 3, eine zweite Fördereinrichtung 24, sowie zwischen diesen ein Freiraum 15 und eine in diesem angeordnete Ausrichteinrichtung 21 vorgesehen. Die Ausrichteinrichtung 21 ist hier anders als beim Ausführungsbeispiel gemäß den vorstehenden Figuren gezeigt. Zwar ist dort ebenfalls eine Schräge 22 vorgesehen, jedoch wird diese mittels eines umlaufenden Förderbandes 36 gebildet, das über entsprechende Umlenkrollen 37 geführt wird. Die oberste Umlenkrolle 37 befindet sich im Bereich der Förderebene der Würste 2, die rechts gezeigte Umlenkrolle 37 deutlich darunter, so dass sich ein entsprechend schräg verlaufendes Trum 38 ergibt, das die Schräge 22 bildet.

Eine der Rollen 37 ist angetrieben, so dass das Förderband 36 umläuft. Jedoch ist seine Bewegungsgeschwindigkeit geringer als die Fördergeschwindigkeit der beiden Förderbänder oder -riemen 4, sodass eine gegen das Trum 38 laufende Wurst zwangsläufig abgebremst wird.

Exemplarisch ist hier eine Reinigungseinrichtung 39 vorgesehen, über die eine kontinuierliche Reinigung der Außenseite des Förderbandes 36 möglich ist, beispielsweise über eine rotierende Bürste 40 oder ähnliches.

Unabhängig davon, wie nun die erfindungsgemäße Vorrichtung komplett ausgeführt ist, sind die seitlichen Förderbänder oder -riemen 4 lösbar von der jeweiligen Bewegungseinrichtung, also den entsprechenden Umlenk- oder Förderrollen, können also entnommen und gegen andere getauscht werden. Dies gilt ebenso für das zwischen ihnen befindliche Fördermittel 7, also das zusätzliche Förderband. Dies ermöglicht es, entsprechend andere Förderbänder oder-riemen 4, 7 aufzuziehen, die beispielsweise größere oder kleinere Stollen aufweisen, um auch Würste anderen Kalibers prozessieren zu können. Beispielsweise ist ein erster Satz an Förderbändern oder-riemen 4, 7 mit Stollen, die für ein Kaliber 1 - 3 ausgelegt sind, vorgesehen. Ein zweiter Satz an Förderbändern oder -riemen 4, 7 ist für ein Kaliber 4 - 6 ausgelegt etc. Hierüber kann also auf einfache Weise die Transportvorrichtung zur Prozessierung unterschiedlicher Wurstkaliber umgerüstet werden. Eine Umstellung der Ausrichteinrichtung kann insofern erforderlich sein, als die Schräge 22 gegebenenfalls mit ihrem niedrigeren Ende etwas angehoben wird, um ein zeitlich früheres Auflaufen kleinerer, nur einen geringeren Bauch aufweisender Würste zu ermöglichen.

Auch besteht die Möglichkeit, zur Anpassung der Vorrichtung 1 an unterschiedlich lange Würste, die beiden seitlichen Förderbänder oder -riemen 4 in ihrem Abstand zueinander zu verändern. Dies kann beispielsweise dadurch erfolgen, dass sie in entsprechende, weiter auseinanderliegende Führungsnuten an den entsprechenden Umlenk- oder Förderrollen eingelegt werden. Dies ermöglicht es, unterschiedlich lange Würste prozessieren zu können, diese aber jeweils im Bereich ihrer Wurstenden aufzulagern, und hierüber ein sicheres schwerkraftbedingtes Durchpendeln der Würste in den Freiraum zu ermöglichen.

Figur 9 zeigt schließlich eine dritte Ausführungsform einer erfindungsgemäßen Vorrichtung 1, wiederum umfassend eine erste Fördereinrichtung 3, eine zweite Fördereinrichtung 24 sowie eine zwischen diesen angeordnete Ausrichteinrichtung 21, die wiederum im Freiraum 15 angeordnet ist. Diese umfasst einen z. B. schräg vertikal bewegbaren Stift 41, der, siehe den Doppelpfeil, über einen Stellzylinder 42 oder dergleichen mit entsprechend hoher Frequenz vertikal bewegt werden kann und so in den Bewegungsweg einer antransportierten, durchhängenden Wurst 2 bewegt wird. Jede Wurst läuft gegen den Stift, wird kurzzeitig gebremst und hochgeschwenkt, wonach sie unmittelbar auf die zweite Fördereinrichtung 24 übergeben wird, nachdem hier die Ausrichteinrichtung 21 direkt vor dem Übergang der Förderbänder oder -riemen 4 zur zweiten Fördereinrichtung 24 angeordnet ist. Hier ist bevorzugt eine entsprechende sensorische oder kamerabasierte Erfassungseinrichtung vorgesehen, über die jede einzelne Wurst 2 erfasst wird, so dass der Stift 21 entsprechend getaktet gesteuert werden kann.

Gezeigt ist hier ebenfalls eine optionale Ausrichteinrichtung 43, umfassend im gezeigten Beispiel ein positionsfestes, rotierendes Rad 44, mit dem die einzelnen Würste, die in den Stollen 6, 9 aufgenommen sind, seitlich ausgerichtet werden können. Das Rad 44 greift seitlich an den Wurstenden an, so dass die jeweiligen Ende aller daran vorbeilaufenden Würste exakt ausgerichtet werden kann, so dass sämtliche Würste, die nahezu alle die gleiche Länge aufweisen, gleichmäßig seitlich ausgerichtet sind. Die Ausrichteinrichtung 34 findet sich natürlich im Bereich der ersten Fördereinrichtung 3.

## Patentansprüche

1. Vorrichtung zum Transportieren länglicher, eine Krümmung aufweisender Würste (2), mit einer ersten Fördereinrichtung (3) umfassend zwei seitlich voneinander beabstandete umlaufende Förderbänder oder -riemen (4) mit jeweiligen Stollen (6) zur regellosen Aufnahme der Würste (2), wobei in zwei benachbarten Stollen (6) jeweils ein Endabschnitt einer Wurst (2) aufnehmbar ist, wobei zumindest abschnittsweise entlang der Förderstrecke unterhalb der Förderbänder oder -riemen (4) ein Freiraum (15) zur Ermöglichung eines Durchpendelns der im Randbereich auf den Förderbändern oder-riemen (4) gelagerten Würste (2) derart, dass sie mit der Krümmung nach unten in den Freiraum (15) hängen, vorgesehen ist, mit einem Anlaufbauteil (22), gegen das eine durchhängende Wurst (2) läuft, worüber sie in Richtung der Förderebene hochgeschwenkt wird, und mit einer zweiten Fördereinrichtung (24) zur Übernahme der hochgeschwenkten Wurst (2).

2. Vorrichtung nach Anspruch 1, **dadurch gekennzeichnet, dass** dem Freiraum (15) vorgeschaltet zwischen den Förderbändern oder -riemen (4) ein weiteres umlaufendes Fördermittel (7) vorgesehen ist, das Stollen (9) aufweist, die in Verlängerung der Stollen (6) der Förderbänder oder - riemen (4) angeordnet sind und die Wurst (2) aufnehmen.

3. Vorrichtung nach Anspruch 1 oder 2, **dadurch gekennzeichnet, dass** das Anlaufbauteil als im Freiraum (15) angeordnete Schräge (22) ausgeführt ist.

4. Vorrichtung nach Anspruch 3, **dadurch gekennzeichnet, dass** die Schräge (22) als rampenartige, schräg angeordnete Platte (23) oder als schräg angeordnete Strebe oder Leiste ausgeführt ist.

5. Vorrichtung nach Anspruch 3, **dadurch gekennzeichnet, dass** die Schräge (22) über ein Trum (38) eines im Freiraum (15) angeordneten umlaufenden Förderbandes (36), das mit einer niedrigeren Geschwindigkeit umläuft als die Förderbänder oder -riemen (4), oder über mehrere, einander in Transportrichtung nachgeschaltete, drehbare Rollen gebildet ist.

6. Vorrichtung nach einem der Ansprüche 3 bis 5, **dadurch gekennzeichnet, dass** der Anstellwinkel der Schräge (22) manuell oder automatisch verstellbar ist.

7. Vorrichtung nach Anspruch 1 oder 2, **dadurch gekennzeichnet, dass** das Anlaufbauteil ein vorzugsweise vertikal auf- und ab bewegbarer Stift (41)ist, wobei die durchhängende Wurst (2) gegen den hochgefahrenen Stift (41) läuft, der nach Hochschwenken der Wurst (2) abwärts bewegt wird, oder dass das Anlaufbauteil eine drehbare Rolle ist.

8. Vorrichtung nach einem der vorangehenden Ansprüche, **dadurch gekennzeichnet, dass** die Stollen (6, 9) an den Förderbändern oder -riemen (4) und gegebenenfalls dem Fördermittel (7) in Förderrichtung derart voneinander beabstandet sind, dass sich zwei benachbarte, in den Stollen (6, 9) aufgenommen Würste (2) nicht berühren.

9. Vorrichtung nach einem der vorangehenden Ansprüche, **dadurch gekennzeichnet, dass** im Bereich des Freiraums (15) Umlenkeinrichtungen (17) zum Verkippen der Förderbänder oder -riemen (4) um ihre Längsachse nach innen zum Freiraum (15) hin vorgesehen sind.

10. Vorrichtung nach Anspruch 9, **dadurch gekennzeichnet, dass** die Umlenkeinrichtungen (17) in Form zweier Schienen (18), die die Förderbänder oder -riemen (4) in Förderrichtung führen und eine die Verkippung erwirkende Führungsflächenform aufweisen, gebildet sind.

11. Vorrichtung nach Anspruch 9 oder 10, **dadurch gekennzeichnet, dass** die Verkippung um einen Winkel zwischen 15-60°, insbesondere zwischen 25-45° und vorzugsweise um 30° erfolgt.

12. Vorrichtung nach einem der Ansprüche 9 bis 11, **dadurch gekennzeichnet, dass** Vibrationsmittel (19) zum Erzeugen von Vibrationen an den Umlenkeinrichtungen (17) zumindest im Bereich der Führung der Förderbänder oder -riemen (4) vorgesehen sind.

13. Vorrichtung nach einem der vorangehenden Ansprüche, **dadurch gekennzeichnet, dass** die Förderbänder oder-riemen (4) in ihrem Abstand zueinander manuell oder automatisch verstellbar sind.

14. Vorrichtung nach einem der vorangehenden Ansprüche, **dadurch gekennzeichnet, dass** die Förderbänder oder-riemen (4) lösbar und austauschbar an der sie bewegenden Bewegungseinrichtung angeordnet sind.

15. Vorrichtung nach einem der vorangehenden Ansprüche, **dadurch gekennzeichnet, dass** der ersten Fördereinrichtung (3) eine Ausrichteinrichtung (43) zum seitlichen Ausrichten der in den Stollen (6, 9) aufgenommenen Würste (2) zugeordnet ist.

16. Vorrichtung nach Anspruch 15, **dadurch gekennzeichnet, dass** die Ausrichteinrichtung (43) ein positionsfestes, rotierendes Rad (44), gegebenenfalls mit an den einzelnen Würsten (2) endseitig angreifenden Ausrichtabschnitten aufweist.

17. Vorrichtung nach einem der vorangehenden Ansprüche, **dadurch gekennzeichnet, dass** die zweite Fördereinrichtung (24) mittels mehrerer parallel angeordneter Förderbänder, Förderriemen oder Förderschnüre (25) gebildet ist, wobei die Förderbänder oder -riemen (4) der ersten Fördereinrichtung (3) zwischen zwei Förderbänder, Förderriemen oder Förderschnüre (25) der zweiten Fördereinrichtung (24) laufen.

18. Vorrichtung nach einem der vorangehenden Ansprüche, **dadurch gekennzeichnet, dass** der zweiten Fördereinrichtung (24) eine Gruppierungseinrichtung (32) zum Bilden einer Wurstgruppe (33) zugeordnet ist.

19. Vorrichtung nach Anspruch 18, **dadurch gekennzeichnet, dass** die Gruppierungseinrichtung (33) wenigstens ein reversibel in den Bewegungsweg der Würste (2) einbringbares Brems- oder Stoppelement (34) zum Bremsen oder Stoppen einer Wurst (2) zur Bildung einer Wurstgruppe (33) umfasst, wobei vorzugsweise das Brems- oder Stoppelement ein bewegbarer Stift (34) ist, gegen den eine erste Wurst (2) läuft, auf die dann eine oder mehrere weitere Würste (2) zur Bildung der Wurstgruppe (33) auflaufen.

## Claims

1. Device for the transportation of elongate sausages (2) exhibiting a curvature, said device having a first conveying device (3) comprising two circulating conveyor belts or belt conveyors (4) spaced apart from one another laterally, each having studs (6) for randomly receiving the sausages (2), wherein an end portion of a sausage (2) can be received in two adjacent studs (6) in each case, wherein a free space (15) is provided beneath the conveying belts or belt conveyors (4) at least sectionally along the conveying path, in order to facilitate a swing-through of the sausages (2) mounted on the conveyor belts or belt conveyors (4) in the peripheral region in such a manner that they hang in the free space (15) with the curvature facing downwards, said device having a lead component (22) into which a sagging sausage (2) runs, by means of which it is pivoted up in the direction of the conveying plane, and having a second conveying device (24) for receiving the upwardly pivoted sausage (2).

2. Device according to Claim 1, **characterized in that** a further circulating conveying means (7) is provided upstream of the free space (15) between the conveyor belts or belt conveyors (4), which further circulating conveying device has studs (9) which are arranged in the extension of the studs (6) of the conveyor belts or belt conveyors (4) and receive the sausage (2).

3. Device according to Claim 1 or 2, **characterized in that** the lead component is configured as an inclined surface (22) arranged in the free space (15) .

4. Device according to Claim 3, **characterized in that** the inclined surface (22) is in the form of a ramp-like, slantingly arranged plate (23) or in the form of a slantingly arranged strut or rail.

5. Device according to Claim 3, **characterized in that** the inclined surface (22) is created via a strand (38) of a circulating conveyor belt (36) arranged in the free space (15), which conveyor belt circulates at a lower speed than the conveyor belts or belt conveyors (4), or by means of a plurality of rotatable rollers arranged one after the other in the transport direction.

6. Device according to one of Claims 3 to 5, **characterized in that** the pitch of the inclined surface (22) is capable of being adjusted manually or automatically.

7. Device according to Claim 1 or 2, **characterized in that** the lead component is a pin (41) that can be moved up and down preferably vertically, wherein the sagging sausage (2) runs into the raised pin (41) which is moved downwards after the sausage (2) has been pivoted up, or **in that** the lead component is a rotatable roller.

8. Device according to one of the preceding claims, **characterized in that** the studs (6, 9) on the conveyor belts or belt conveyors (4) and possibly the conveying means (7) are spaced apart from one another in the conveying direction, in such a manner that two adjacent sausages (2) received in the studs (6, 9) do not come into contact.

9. Device according to one of the preceding claims, **characterized in that** in the region of the free space (15) deflection devices (17) for tilting the conveyor belts or belt conveyors (4) inwards to the free space (15) about their longitudinal axis are provided.

10. Device according to Claim 9, **characterized in that** the deflection devices (17) are created in the form of two rails (18) which guide the conveyor belts or belt conveyors (4) in the conveying direction and have a guide surface shape which causes tilting.

11. Device according to Claim 9 or 10, **characterized in that** the tilting takes place about an angle between 15-60°, in particular between 25-45° and preferably about 30°.

12. Device according to one of Claims 9 to 11, **characterized in that** vibrational means (19) for generating vibrations at the deflection devices (17) are provided at least in the region of the guide of the conveyor belts or belt conveyors (4).

13. Device according to one of the preceding claims, **characterized in that** the conveyor belts or belt conveyors (4) are manually or automatically adjustable relative to one another in terms of their spacing.

14. Device according to one of the preceding claims, **characterized in that** the conveyor belts or belt conveyors (4) are arranged detachably and exchangeably on the moving device moving them.

15. Device according to one of the preceding claims, **characterized in that** the first conveying device (3) is assigned an aligning device (43) for the lateral alignment of the sausages (2) received in the studs (6, 9).

16. Device according to Claim 15, **characterized in that** the aligning device (43) has a positionally fixed rotating wheel (44), possibly with aligning portions which make contact with the ends of the individual sausages (2).

17. Device according to one of the preceding claims, **characterized in that** the second conveying device (24) is formed by means of a plurality of conveyor belts, belt conveyors or conveyor cords (25) arranged in parallel, wherein the conveyor belts or belt conveyors (4) of the first conveying device (3) run between two conveyor belts, belt conveyors or conveyor cords (25) of the second conveying device (24).

18. Device according to one of the preceding claims, **characterized in that** the second conveying device (24) is assigned a grouping device (32) for creating a group of sausages (33).

19. Device according to Claim 18, **characterized in that** the grouping device (33) comprises at least one braking or stopping element (34) for braking or stopping a sausage (2) to create a group of sausages (33), which braking or stopping element can be introduced reversibly into the movement path of the sausages (2), wherein the braking or stopping element is preferably a movable pin (34) into which a first sausage (2) runs, on which one or a plurality of other sausages (2) then accumulate to form the group of sausages (33).

## Revendications

1. Dispositif, destiné à transporter des saucisses (2) allongées, pourvues d'une courbure, doté d'un premier système de convoyage (3) comprenant deux bandes ou courroies de convoyage (4) en révolution, latéralement écartées l'une de l'autre avec des tunnels (6) respectifs, destinés à recevoir les saucisses (2) de manière aléatoire, dans deux tunnels (6) voisins, un tronçon d'extrémité d'une saucisse (2) étant susceptible d'être reçu respectivement, au moins par tronçons le long du trajet de convoyage, en-dessous des bandes ou courroies de convoyage (4) étant prévu un espace libre (15) permettant une oscillation des saucisses (2) posées dans la zone du bord sur les bandes ou courroies de convoyage (4), de sorte qu'elles soient accrochées dans l'espace libre (15) avec la courbure dirigée vers le bas, doté d'un élément de démarrage (22), contre lequel se meut une saucisse (2) affaissée, moyennant quoi elle est pivotée vers le haut dans la direction du plan de convoyage, et doté d'un deuxième système de convoyage (24) destiné à reprendre la saucisse (2) pivotée vers le haut.

2. Dispositif selon la revendication 1, **caractérisé en ce qu'**en amont de l'espace libre (15), entre les bandes ou courroies de convoyage (4) est prévu un moyen de convoyage (7) additionnel en révolution, qui comporte des tunnels (9) qui sont placés dans le prolongement des tunnels (6) des bandes ou courroies de convoyage (4) et qui accueillent la saucisse (2).

3. Dispositif selon la revendication 1 ou 2, **caractérisé en ce que** l'élément de démarrage est réalisé sous la forme d'une inclinaison (22) placée dans l'espace libre (15).

4. Dispositif selon la revendication 3, **caractérisé en ce que** l'inclinaison (22) est réalisée sous la forme d'une plaque (23) en forme de rampe, placée en inclinaison ou sous la forme d'une entretoise ou baguette, placée en inclinaison.

5. Dispositif selon la revendication 3, **caractérisé en ce que** l'inclinaison (22) est créée sur un brin (38) d'une bande de convoyage (36) en révolution, placée dans l'espace libre (15), qui est en révolution à une vitesse inférieure à celle des bandes ou courroies de convoyage (4), ou sur plusieurs galets rotatifs, montés les uns derrière les autres dans la direction de transport.

6. Dispositif selon l'une quelconque des revendications 3 à 5, **caractérisé en ce que** l'angle d'attaque de l'inclinaison (22) est ajustable de manière manuelle ou automatique.

7. Dispositif selon la revendication 1 ou 2, **caractérisé en ce que** l'élément de démarrage est une tige (41), de préférence déplaçable vers le haut et vers le bas en direction verticale, la saucisse (2) affaissée se mouvant contre la tige (41) relevée, qui après le pivotement vers le haut de la saucisse (2) est déplacée vers le bas, ou **en ce que** l'élément de démarrage est un galet rotatif.

8. Dispositif selon l'une quelconque des revendications précédentes, **caractérisé en ce que** les tunnels (6, 9) sur les bandes ou courroies de convoyage (4) et le cas échéant sur le moyen de convoyage (7) sont écartés les uns des autres dans la direction de convoyage de telle sorte que deux saucisses (2) voisines, reçues dans les tunnels (6, 9) ne se touchent pas.

9. Dispositif selon l'une quelconque des revendications précédentes, **caractérisé en ce que** dans la zone de l'espace libre (15) sont prévus des systèmes de renvoi (17) destinés à faire basculer les bandes ou courroies de convoyage (4) autour de leur axe longitudinal vers l'intérieur, en direction de l'espace libre (15).

10. Dispositif selon la revendication 9, **caractérisé en ce que** les systèmes de renvoi (17) sont conçus sous la forme de deux rails (18), qui guident les bandes ou courroies de convoyage (4) dans la direction de convoyage et qui comportent une surface de guidage d'une forme provoquant le basculement.

11. Dispositif selon la revendication 9 ou 10, **caractérisé en ce que** le basculement s'effectue autour d'un angle compris entre 15 et 60°, notamment entre 25 et 45° et de préférence de 30°.

12. Dispositif selon l'une quelconque des revendications 9 à 11, **caractérisé en ce que** des moyens vibratoires (19) sont prévus pour générer des vibrations sur les systèmes de renvoi (17), au moins dans la zone du guidage des bandes ou courroies de convoyage (4).

13. Dispositif selon l'une quelconque des revendications précédentes, **caractérisé en ce que** les bandes ou courroies de convoyage (4) sont réglables de manière manuelle ou automatique au niveau de leur écart mutuel.

14. Dispositif selon l'une quelconque des revendications précédentes, **caractérisé en ce que** les bandes ou courroies de convoyage (4) sont placées de manière amovible et interchangeable sur le système de déplacement qui les déplace.

15. Dispositif selon l'une quelconque des revendications précédentes, **caractérisé en ce que** le premier système de convoyage (3) est associé à un système d'alignement (43) pour l'alignement latéral des saucisses (2) reçues dans les tunnels (6, 9).

16. Dispositif selon la revendication 15, **caractérisé en ce que** le système d'alignement (43) présente une roue (44) rotative stationnaire, dotée le cas échéant de segments d'alignement s'engageant sur l'extrémité des saucisses (2) individuelles.

17. Dispositif selon l'une quelconque des revendications précédentes, **caractérisé en ce que** le deuxième système de convoyage (24) est formé au moyen de plusieurs bandes de convoyage, courroies de convoyage ou lanières de convoyage (25) placées à la parallèle, les bandes ou courroies de convoyage (4) du premier système de convoyage (3) fonctionnant entre deux bandes de convoyage, courroies de convoyage ou lanières de convoyage (25) du deuxième système de convoyage (24).

18. Dispositif selon l'une quelconque des revendications précédentes, **caractérisé en ce qu'**au deuxième système de convoyage (24) est associé un système de regroupement (32), destiné à créer un groupe de saucisses (33).

19. Dispositif selon la revendication 18, **caractérisé en ce que** le système de regroupement (33) comprend au moins un élément de freinage ou d'arrêt (34) susceptible d'être introduit de manière réversible dans le trajet de déplacement des saucisses (2), destiné à freiner ou à arrêter une saucisse (2) afin de créer un groupe de saucisses (33), l'élément de freinage ou d'arrêt étant de préférence une tige (34) mobile contre laquelle se meut une première saucisse (2), qui est ensuite rejointe par une ou plusieurs saucisses (2) additionnelles, afin de créer le groupe de saucisses (33) .
